(19) 

**Europäisches Patentamt**
**European Patent Office**
**Office européen des brevets**

(11) **EP 4 564 284 A1**

(12) **EUROPEAN PATENT APPLICATION**
published in accordance with Art. 153(4) EPC

(43) Date of publication:
**04.06.2025 Bulletin 2025/23**

(21) Application number: **23856060.1**

(22) Date of filing: **24.03.2023**

(51) International Patent Classification (IPC):
**G06T 5/00** (2024.01)

(52) Cooperative Patent Classification (CPC):
**G06T 5/00; G06V 10/774; G06V 20/58**

(86) International application number:
**PCT/CN2023/083772**

(87) International publication number:
**WO 2024/040964 (29.02.2024 Gazette 2024/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.08.2022 CN 202211009619**

(71) Applicant: **Shenzhen Yinwang Intelligent
Technologies Co., Ltd.
Shenzhen, Guangdong 518129 (CN)**

(72) Inventors:
• **BI, Shuzhan
Shenzhen, Guangdong 518129 (CN)**
• **ZHANG, Jie
Shenzhen, Guangdong 518129 (CN)**
• **XIE, Penghuan
Shenzhen, Guangdong 518129 (CN)**

(74) Representative: **Gill Jennings & Every LLP
The Broadgate Tower
20 Primrose Street
London EC2A 2ES (GB)**

(54) **RECOGNITION MODEL TRAINING METHOD AND APPARATUS, AND MOVABLE INTELLIGENT DEVICE**

(57) This application relates to the field of intelligent driving technologies, and provides a recognition model training method and apparatus, and a mobile intelligent device, to obtain more accurate 3D information of an obstacle when a recognition model obtained through training is used to perform obstacle recognition. The method includes: obtaining a first image captured by a first photographing component, where the first photographing component corresponds to a first angle of view; generating, based on the first image, a second image corresponding to a second photographing component, where the second photographing component is determined based on the first photographing component, and the second photographing component corresponds to a second angle of view; determining, based on first three-dimensional information of a first object in the first image, second three-dimensional information of the first object in the second image; and training a recognition model based on the second image and the second three-dimensional information of the first object, where the recognition model is used to recognize an object in an image captured by the first photographing component.

FIG. 10

## Description

This application claims priority to Chinese Patent Application No. 202211009619.X, filed with the China National Intellectual Property Administration on August 22, 2022 and entitled "RECOGNITION MODEL TRAINING METHOD AND APPARATUS, AND MOBILE INTELLIGENT DEVICE", which is incorporated herein by reference in its entirety.

## TECHNICAL FIELD

This application relates to the field of intelligent driving, and in particular, to a recognition model training method and apparatus, and a mobile intelligent device.

## BACKGROUND

Currently, a mobile intelligent device (for example, an intelligent driving vehicle or a robotic vacuum cleaner) may obtain environment information by using a visual sensor (for example, a camera) or the like, to recognize an obstacle. Obstacle recognition based on a monocular (monocular) camera is a low-cost visual perception solution. A principle of the solution is that an image captured by the monocular camera is input into a preset recognition model, and three-dimensional (3 dimensions, 3D) information, for example, 3D coordinates, a size, and an orientation angle, of each obstacle included in the image may be output by using the recognition model.

In a related solution, the recognition model is trained by obtaining an image and 3D information of an obstacle included in the image. However, because the obtained 3D information of the obstacle is unevenly distributed, when the recognition model obtained through training based on the unevenly-distributed 3D information of the obstacle is used to perform obstacle recognition, obtained 3D information of an obstacle is inaccurate.

## SUMMARY

This application provides a recognition model training method and apparatus, and a mobile intelligent device, to obtain more accurate 3D information of an obstacle when a recognition model obtained through training is used to perform obstacle recognition.

To achieve the foregoing objective, this application uses the following technical solutions.

According to a first aspect, this application provides a recognition model training method, where the method includes: obtaining a first image captured by a first photographing component, where the first photographing component corresponds to a first angle of view; generating, based on the first image, a second image corresponding to a second photographing component, where the second photographing component is determined based on the first photographing component, and the second photographing component corresponds to a second angle of view; determining, based on first three-dimensional information of a first object in the first image, second three-dimensional information of the first object in the second image; and training a recognition model based on the second image and the second three-dimensional information, where the recognition model is used to recognize an object in an image captured by the first photographing component.

Based on the foregoing technical solution, an image corresponding to the second photographing component is generated by using the image captured by the first photographing component, and the second photographing component may be determined based on the first photographing component, the first photographing component corresponds to the first angle of view, and the second photographing component corresponds to the second angle of view. In this way, images at different angles of view of the first photographing component can be obtained, so that obtained image data is abundant. Based on three-dimensional information of the object in the image captured by the first photographing component, three-dimensional information of the object in the image corresponding to the second photographing component is determined, to obtain three-dimensional information of the object in the images at different angles of view of the first photographing component, and further obtain more evenly-distributed three-dimensional information. Then, the recognition model is trained by using the more evenly-distributed three-dimensional information. This can reduce impact of uneven training data distribution on a prediction result of the recognition model. Subsequently, when the recognition model is used to detect an object, obtained three-dimensional information of the object is more accurate.

In a possible design, the second photographing component is a virtual photographing component. Before the generating, based on the first image, a second image corresponding to a second photographing component, the method further includes: rotating a coordinate system of the first photographing component by a preset angle to obtain the second photographing component. Based on this design, the coordinate system of the first photographing component is rotated by the preset angle to obtain the second photographing component. In this way, a virtual photographing component whose angle of view is different from that of the first photographing component can be obtained, to convert the image captured by the first photographing component and the three-dimensional information of the object in the image into an image corresponding to the virtual photographing component and three-dimensional information of an object in the image. Therefore, three-dimensional information of an object at different angles of view can be obtained, so that obtained training data is distributed more evenly. This can reduce impact of uneven training data distribution on a trained model.

In a possible design, intrinsic parameters of the first photographing component and the second photographing component are the same. Alternatively, intrinsic parameters of the first photographing component and the second photographing component are different.

In a possible design, the generating, based on the first image, a second image corresponding to a second photographing component includes: determining first coordinates that are of a first pixel in the first image and that are on a preset reference surface, where the first pixel is any pixel in the first image; determining, based on the first coordinates, second coordinates that are of the first pixel and that correspond to the second photographing component; determining a second pixel based on the second coordinates; and generating the second image based on the second pixel. Based on this design, the preset reference surface is used as a reference. There is a correspondence between the first pixel and a point on the preset reference surface, and there is also a correspondence between the second pixel and a point on the preset reference surface. Therefore, by using the preset reference surface as an intermediary, a pixel corresponding to the second photographing component may be determined based on a pixel in the image captured by the first photographing component, and the image corresponding to the second photographing component is generated based on the second pixel corresponding to the second photographing component.

In a possible design, the preset reference surface is a spherical surface that uses an optical center of the first photographing component as a sphere center. Based on this design, the preset reference surface is a spherical surface that uses an optical center of the first photographing component as a sphere center. In this way, when the coordinate system of the first photographing component is rotated by the preset angle to obtain the second photographing component, the preset reference surface does not change. Preset reference surfaces corresponding to the first photographing component and the second photographing component are the same. Therefore, the preset reference surface may be used as an intermediary to determine, based on the pixel in the image captured by the first photographing component, a pixel in the image corresponding to the second photographing component, to generate the image corresponding to the second photographing component.

In a possible design, the determining, based on first three-dimensional information of a first object in the first image, second three-dimensional information of the first object in the second image includes: determining the second three-dimensional information based on the first three-dimensional information and a coordinate conversion relationship between the first photographing component and the second photographing component. Based on this design, the three-dimensional information of the object in the image captured by the first photographing component may be converted into the three-dimensional information of the object in the image corresponding to the second photographing component.

In a possible design, before the determining, based on first three-dimensional information of a first object in the first image, second three-dimensional information of the first object in the second image, the method further includes: obtaining point cloud data that corresponds to the first image and that is collected by a sensor, where the point cloud data includes third three-dimensional information of the first object; and determining the first three-dimensional information based on the third three-dimensional information and a coordinate conversion relationship between the first photographing component and the sensor. Based on this design, three-dimensional information that is of an object and that is collected by the sensor may be converted into three-dimensional information of the object in the image captured by the first photographing component.

In a possible design, the first three-dimensional information, the second three-dimensional information, or the third three-dimensional information includes one or more of the following: three-dimensional coordinates, a size, and an orientation angle.

According to a second aspect, this application provides a recognition model training apparatus. The recognition model training apparatus includes a corresponding module or unit for implementing the foregoing method. The module or unit may be implemented by hardware, or may be implemented by software, or may be implemented by hardware executing corresponding software. In a possible design, the recognition model training apparatus includes an obtaining unit (or referred to as an obtaining module) and a processing unit (or referred to as a processing module). The obtaining unit is configured to obtain a first image captured by a first photographing component, where the first photographing component corresponds to a first angle of view. The processing unit is configured to: generate, based on the first image, a second image corresponding to a second photographing component, where the second photographing component is determined based on the first photographing component, and the second photographing component corresponds to a second angle of view; determine, based on first three-dimensional information of a first object in the first image, second three-dimensional information of the first object in the second image; and train a recognition model based on the second image and the second three-dimensional information, where the recognition model is used to recognize an object in an image captured by the first photographing component.

In a possible design, the second photographing component is a virtual photographing component. The processing unit is further configured to: rotate a coordinate system of the first photographing component by a preset angle to obtain the second photographing component.

In a possible design, intrinsic parameters of the first photographing component and the second photographing component are the same. Alternatively, intrinsic parameters of the first photographing component and the second photographing component are different.

In a possible design, the processing unit is specifically configured to: determine first coordinates that are of a first pixel in the first image and that are on a preset reference surface, where the first pixel is any pixel in the first image; determine, based on the first coordinates, second coordinates that are of the first pixel and that correspond to the second photographing component; determine a second pixel based on the second coordinates; and generate the second image based on the second pixel.

In a possible design, the preset reference surface is a spherical surface that uses an optical center of the first photographing component as a sphere center.

In a possible design, the processing unit is specifically configured to determine the second three-dimensional information based on the first three-dimensional information and a coordinate conversion relationship between the first photographing component and the second photographing component.

In a possible design, the obtaining unit is further configured to obtain point cloud data that corresponds to the first image and that is collected by a sensor, where the point cloud data includes third three-dimensional information of the first object. The processing unit is further configured to determine the first three-dimensional information based on the third three-dimensional information and a coordinate conversion relationship between the first photographing component and the sensor.

In a possible design, the first three-dimensional information, the second three-dimensional information, or the third three-dimensional information includes one or more of the following: three-dimensional coordinates, a size, and an orientation angle.

According to a third aspect, this application provides a recognition model training apparatus, including a processor, where the processor is coupled to a memory, and the processor is configured to execute a computer program stored in the memory, to enable the recognition model training apparatus to perform the method according to the first aspect and any one of the designs of the first aspect. Optionally, the memory may be coupled to the processor, or may be independent of the processor.

In a possible design, the recognition model training apparatus further includes a communication interface, and the communication interface may be used by the recognition model training apparatus to communicate with another apparatus. For example, the communication interface may be a transceiver, an input/output interface, an interface circuit, an output circuit, an input circuit, a pin, or a related circuit.

The recognition model training apparatus in the third or fourth aspect may be a computing platform in an intelligent driving system, and the computing platform may be an in-vehicle computing platform or a cloud computing platform.

According to a fourth aspect, this application provides an electronic device, where the electronic device includes the recognition model according to the first aspect or the second aspect and any one of the designs of the first aspect or the second aspect.

In a possible design, the electronic device further includes the first photographing component according to the first aspect or the second aspect and any one of the designs of the first aspect or the second aspect. For example, the first photographing component may be a monocular camera.

According to a fifth aspect, this application provides a computer-readable storage medium. The computer-readable storage medium includes a computer program or instructions. When the computer program or the instruction is or are run on a recognition model training apparatus, the recognition model training apparatus is enabled to perform the method according to the first aspect and any one of the designs of the first aspect.

According to a sixth aspect, this application provides a computer program product, where the computer program product includes a computer program or instructions. When the computer program or the instruction is or are run on a computer, the computer is enabled to perform the method according to the first aspect and any one of the designs of the first aspect.

According to a seventh aspect, this application provides a chip system, including at least one processor and at least one interface circuit. The at least one interface circuit is configured to: perform a transceiver function, and send instructions to the at least one processor. When the at least one processor executes the instructions, the at least one processor performs the method according to the first aspect and any one of the designs of the first aspect.

According to an eighth aspect, this application provides a mobile intelligent device, including a first photographing component and the recognition model training apparatus according to the second aspect or the third aspect and any one of the designs of the second aspect or the third aspect, where the first photographing component is configured to: capture a first image, and transmit the first image to the recognition model training apparatus.

It should be noted that, for technical effect brought by any one of the designs of the second aspect to the eighth aspect, refer to technical effect brought by a corresponding design of the first aspect. Details are not described herein again.

BRIEF DESCRIPTION OF DRAWINGS

FIG. 1 is a schematic diagram of point cloud data according to an embodiment of this application;
FIG. 2 is a schematic diagram of a coordinate system of a monocular camera and a coordinate system of a lidar according to an embodiment of this application;
FIG. 3 is a schematic diagram of visual 3D information according to an embodiment of this application;
FIG. 4 is a schematic diagram of an orientation angle of an obstacle according to an embodiment of this application;
FIG. 5 is a schematic diagram of distribution of orientation angles that are obtained for training a recognition model in a related solution;
FIG. 6 is a schematic diagram of an architecture of a system according to an embodiment of this application;
FIG. 7 is a schematic diagram of a structure of a training device according to an embodiment of this application;
FIG. 8 is a functional block diagram of a vehicle according to an embodiment of this application;
FIG. 9 is a schematic diagram of a camera deployed on a vehicle according to an embodiment of this application;
FIG. 10 is a schematic flowchart of a recognition model training method according to an embodiment of this application;
FIG. 11 is a schematic diagram of a second photographing component according to an embodiment of this application;
FIG. 12 is a schematic diagram of distribution of orientation angles that are obtained for training a recognition model according to an embodiment of this application;
FIG. 13 is a schematic flowchart of another recognition model training method according to an embodiment of this application;
FIG. 14 is a schematic diagram of a preset reference surface according to an embodiment of this application;
FIG. 15 is a schematic diagram of 3D information obtained through prediction by using a recognition model according to an embodiment of this application;
FIG. 16 is a schematic diagram of a structure of a recognition model training apparatus according to an embodiment of this application; and
FIG. 17 is a schematic diagram of a structure of a chip system according to an embodiment of this application.

DESCRIPTION OF EMBODIMENTS

In descriptions of this application, unless otherwise specified, "/" represents an "or" relationship between associated objects. For example, A/B may represent A or B. In this application, "and/or" describes only an association relationship for describing associated objects and represents that three relationships may exist. For example, A and/or B may represent the following three cases: Only A exists, both A and B exist, and only B exists, where A or B may be singular or plural.

In the descriptions of this application, unless otherwise specified, "a plurality of" means two or more. "At least one of the following items (pieces)" or a similar expression thereof means any combination of these items, including a single item (piece) or any combination of a plurality of items (pieces). For example, at least one of a, b, or c may represent: a, b, c, a and b, a and c, b and c, and a and b and c, where a, b, and c may be singular or plural.

In addition, to clearly describe technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In embodiments of this application, the term like "example" or "for example" is used to represent giving an example, an illustration, or a description. Any embodiment or design solution described as "example" or "for example" in embodiments of this application should not be interpreted as being more preferred or advantageous than another embodiment or design solution. Exactly, use of the terms such as "example" or "for example" are intended to present a related concept in a specific manner for ease of understanding.

A feature, a structure, or a characteristic in this application may be combined in one or more embodiments in any proper manner. Sequence numbers of the foregoing processes do not mean execution sequences in embodiments of this application. The execution sequences of the processes should be determined based on functions and internal logic of the processes, and should not be construed as any limitation on the implementation processes of embodiments of this application.

In some scenarios, some optional features in embodiments of this application may be independently implemented without depending on another feature, to resolve a corresponding technical problem and achieve corresponding effect. Alternatively, in some scenarios, the optional features may be combined with another feature based on requirements.

In this application, unless otherwise specified, for same or similar parts in embodiments, refer to each other. In various embodiments of this application, unless otherwise specified or there is a logic conflict, terms and/or descriptions in different embodiments are consistent and may be mutually referenced, and technical features in different embodiments may be combined based on an internal logical relationship thereof, to form a new embodiment. The implementations of this application are not intended to limit the protection scope of this application.

In addition, a network architecture and a service scenario described in embodiments of this application are intended to describe the technical solutions in embodiments of this application more clearly, and do not constitute a limitation on the technical solutions provided in embodiments of this application. A person of ordinary skill in the art may know that, with the evolution of the network architecture and the emergence of new service scenarios, the technical solutions provided in embodiments of this application are also applicable to similar technical problems.

For ease of understanding, the following first describes related technical terms and related concepts that may be used in embodiments of this application.

1. Monocular camera

A monocular camera is a camera that has only one lens and cannot directly measure depth information.

2. Bird eye view

A bird eye view is a three-dimensional view that is drawn, by using a high viewpoint perspective method to look down from a high point, based on the perspective principle. That is, the bird eye view is an image obtained by looking down from a high place.

3. Recognition model

A recognition model is an information processing system including a large quantity of processing units (for example, neurons) that are interconnected, and the processing unit in the recognition model includes a corresponding mathematical expression. After data is input into the processing unit, the processing unit runs the mathematical expression included in the processing unit, calculates the input data, and generates output data. Input data of each processing unit is output data of a previous processing unit connected to the processing unit, and output data of each processing unit is input data of a next processing unit connected to the processing unit.

In the recognition model, after data is input, the recognition model selects corresponding processing units for the input data based on learning and training of the recognition model, performs calculation on the input data by using the processing units, and determines and outputs a final calculation result. In addition, the recognition model may further continuously learn and evolve in a data calculation process, and continuously optimize a calculation process of the recognition model based on feedback of the calculation result. A larger quantity of calculation training times of the recognition model indicates more obtained result feedbacks and a more accurate calculation result.

The recognition model recorded in embodiments of this application is used to process an image captured by a photographing component, to determine three-dimensional information of an object in the image. For example, these objects include but are not limited to various types of obstacles such as a person and an object.

4. Point cloud data

When a laser beam irradiates on a surface of an object, reflected laser light carries information such as an orientation and a distance. If the laser beam performs scanning based on a specific trajectory, information about a reflected laser point is recorded while the laser beam performs scanning. Because scanning is extremely fine, a large quantity of laser points can be obtained, and each laser point includes 3D coordinates. Therefore, laser point clouds may be formed, and these laser point clouds may be referred to as point cloud data. In some embodiments, these laser point clouds may be obtained through laser scanning by using a lidar. Certainly, the point cloud data may alternatively be obtained by using another type of sensor. This application is not limited thereto.

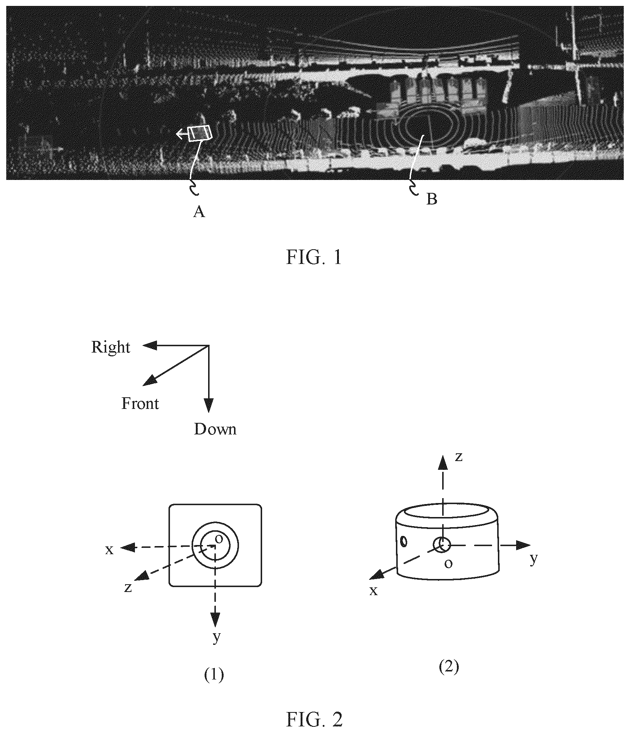

Optionally, the point cloud data may include 3D information of one or more objects, such as 3D coordinates, a size, and an orientation angle. For example, FIG. 1 shows point cloud data according to an embodiment of this application. Each point in FIG. 1 is a laser point, and a position B of a circle is a position of a sensor that obtains point cloud data. A 3D box (for example, a 3D box A) with an arrow is a 3D model established based on 3D information of a scanned object. Coordinates of the 3D box are 3D coordinates of the object. A length, a width, and a height of the 3D box are sizes of the object. A direction of the arrow of the 3D box is an orientation, and the like, of the object.

5. Coordinate system of the monocular camera

A coordinate system of the monocular camera may be a three-dimensional coordinate system that uses an optical center of the monocular camera as an origin. For example, (1) in FIG. 2 is a schematic diagram of a coordinate system of a monocular camera according to an embodiment of this application. As shown in (1) in FIG. 2, the coordinate system of the monocular camera may be a spatial rectangular coordinate system that uses an optical center o of the monocular camera as an origin. A line-of-sight direction of the monocular camera is a positive direction of a z-axis, a downward direction is a positive direction of a y-axis, and a rightward direction is a positive direction of an x-axis. Optionally, the y-axis and the x-axis may be parallel to an imaging plane of the monocular camera.

6. Coordinate system of the lidar

A coordinate system of the lidar may be a three-dimensional coordinate system that uses a laser emission center as an origin. For example, (2) in FIG. 2 is a schematic diagram of a coordinate system of a lidar according to an embodiment of this application. As shown in (2) in FIG. 2, the coordinate system of the lidar may be a spatial rectangular coordinate system that uses the laser emission center o of the lidar as an origin. In the coordinate system of the lidar, an upward direction is a positive direction of the z-axis, a forward direction is a positive direction of the x-axis, and a leftward direction is a positive direction of the y-axis.

It may be understood that the coordinate system of the monocular camera shown in (1) in FIG. 2 and the coordinate system of the lidar shown in (2) in FIG. 2 are merely examples for description. The coordinate system of the monocular camera and the coordinate system of the lidar may alternatively be set in another manner, or may be set to another type of coordinate system. This is not limited in this application.

Currently, a mobile intelligent device (an autonomous driving vehicle is used as an example) may obtain environment information by using a visual sensor (for example, a camera) or the like, to recognize an obstacle. Obstacle recognition based on a monocular camera is a low-cost visual perception solution. A principle of the solution is that an image captured by the monocular camera is input into a preset recognition model, and 3D information that is of each obstacle included in the image and that is in the coordinate system of the monocular camera may be output by using the recognition model.

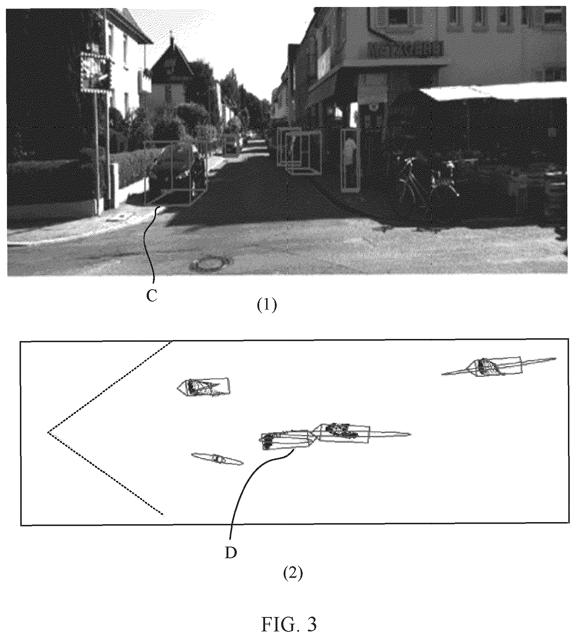

For example, (1) in FIG. 3 is a schematic diagram of visualizing, on an image captured by a monocular camera, 3D information output by the recognition model according to an embodiment of this application. Each 3D box (for example, a 3D box C) shown in (1) in FIG. 3 is drawn based on 3D information of an obstacle on which the 3D box is located. (2) in FIG. (3) is a schematic diagram of visualizing, on a bird eye view, 3D information output by the recognition model according to an embodiment of this application. Similarly, each 3D box (for example, a 3D box D) shown in (2) in FIG. 3 is also drawn based on 3D information of an obstacle on which the 3D box is located.

Currently, the foregoing recognition model may be trained by obtaining an image and 3D information of an obstacle in the image. The 3D information of the obstacle in the image may be obtained based on point cloud data. Specifically, point cloud data corresponding to the image is obtained by using the lidar, and the point cloud data includes 3D information that is of an obstacle (the obstacle is the obstacle in the image) and that is in the coordinate system of the lidar. Then, an extrinsic parameter (extrinsics) between the lidar and the monocular camera is calibrated, so that the 3D information in the coordinate system of the lidar can be converted into 3D information in the coordinate system of the monocular camera. Subsequently, the recognition model may be trained by using the obtained image and the 3D information that is of the obstacle in the converted image and that is in the coordinate system of the monocular camera. It may be understood that the extrinsic parameter refers to a conversion relationship between different coordinate systems. Calibrating the extrinsic parameter between the lidar and the monocular camera is to solve a conversion relationship between the coordinate system (the coordinate system shown in (2) in FIG. 2) of the lidar and the coordinate system (the coordinate system shown in (1) in FIG. 2) of the monocular camera.

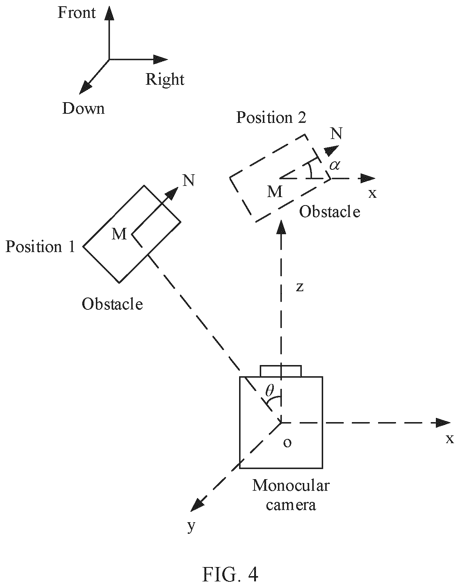

In this solution, the obtained 3D information that is of the obstacle and that is used to train the recognition model is uneven. For example, the 3D information of the obstacle is an orientation angle, and the orientation angle is usually obtained by adding up $\theta$ and $\alpha$. For example, with reference to the coordinate system of the monocular camera shown in (1) in FIG. 2, FIG. 4 is a schematic diagram of $\theta$ and $\alpha$ according to an embodiment of this application. $\theta$ is an included angle in a horizontal direction between a connection line between a center point M of the obstacle and the origin o of the coordinate system of the monocular camera and a z-axis of the coordinate system of the monocular camera, where a direction of an arrow N is an orientation of the obstacle. In the coordinate system of the monocular camera, the obstacle is rotated around a y-axis of the coordinate system of the monocular camera to the z-axis, for example, when the obstacle is moved to a position 2 from a position 1, $\alpha$ represents an included angle between the orientation (namely, the direction of the arrow N shown at the position 2) of the obstacle and a direction of the x-axis, where the origin o of the coordinate system is used as a center, and a connection line from the origin o to the center point M of the obstacle is used as a radius.

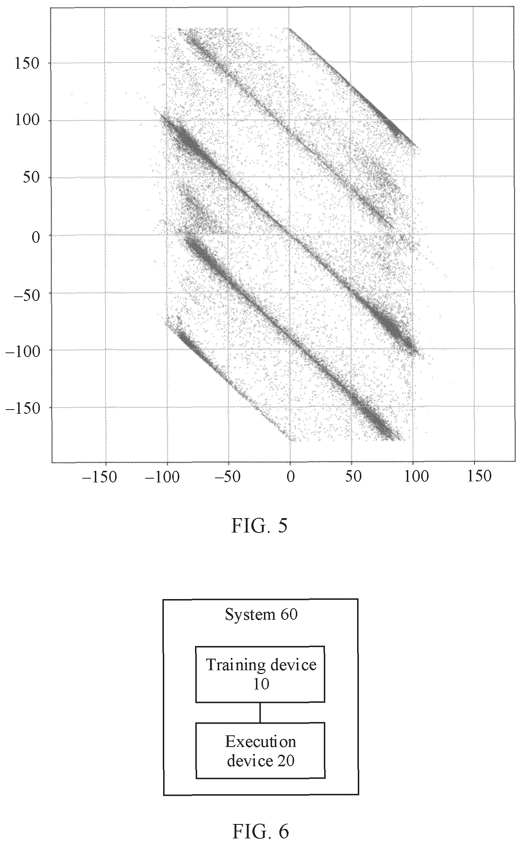

For example, FIG. 5 is a schematic diagram of distribution of $\theta$ and $\alpha$ that are obtained in the solution. As shown in FIG. 5, a horizontal coordinate represents $\theta$, and a vertical coordinate represents $\alpha$. It can be seen from FIG. 5 that $\theta$ and $\alpha$ are unevenly distributed. For example, when $\theta$ is 0 degrees, $\alpha$ is densely distributed in areas such as -180 degrees, -90 degrees, 0 degrees, 90 degrees, and 180 degrees, and $\alpha$ is sparsely distributed in another area other than the foregoing areas.

Both $\theta$ and $\alpha$ may be obtained through prediction by using a recognition model obtained through training. However, generally, $\theta$ is generally predicted accurately, and $\alpha$ is easily affected by uneven training data. Therefore, when the recognition model is trained by using the obtained unevenly-distributed 3D information of the obstacle, the recognition model obtained through training predicts $\alpha$ inaccurately due to impact of uneven distribution of the training data. For example, $\alpha$ that is sparsely distributed is predicted as $\alpha$ that is densely distributed in FIG. 5, so that a predicted orientation angle of the obstacle is inaccurate, that is, predicted 3D information of the obstacle is inaccurate.

Based on this, this application provides a recognition model training method, to reduce impact of uneven distribution of training data on a prediction result of the recognition model, so that when the recognition model obtained through training is used to recognize an obstacle, obtained 3D information of the obstacle is more accurate.

For example, FIG. 6 is a schematic diagram of an architecture of a system according to an embodiment of this application. As shown in FIG. 6, the system 60 includes a training device 10, an execution device 20, and the like.

The training device 10 may run a recognition model to train the recognition model. For example, the training device 10 may be a computing platform in an intelligent driving system. For example, the training device 10 may be various computing devices that have a computing capability, such as a server or a cloud device. The server may be one server, or may be a server cluster including a plurality of servers. The training device 10 may alternatively be an in-vehicle computing platform. A specific type of the training device 10 is not limited in this application.

The recognition model trained by the training device 10 is configured on the execution device 20, to recognize various objects and the like by using the recognition model. For example, the object includes but is not limited to various types of things such as a pedestrian, a vehicle, a road sign, an animal, and a building. In some embodiments, the recognition model trained by the training device 10 may be configured in a plurality of execution devices 20, and each execution device 20 may recognize various obstacles, and the like by using the recognition model configured in the execution device 20. In some embodiments, each execution device 20 may be configured with one or more recognition models trained by the training device 10, and each execution device 20 may recognize various obstacles by using the one or more recognition models configured in the execution device 20.

For example, the execution device 20 may be an artificial intelligence (artificial intelligence, AI) device like a device that has an obstacle recognition requirement, for example, a robotic vacuum cleaner or an intelligent vehicle, or may be a device that has a function of controlling the foregoing device that has an obstacle recognition requirement, like a desktop computer, a handheld computer, a notebook computer, or an ultra-mobile personal computer (ultra-mobile personal computer, UMPC).

For example, in an autonomous driving scenario, in a process in which an autonomous driving vehicle travels based on a predetermined route, a road sign, a driving reference object, an obstacle on a road, and the like in an environment are recognized by using the recognition model, to ensure that the autonomous driving vehicle travels safely and accurately. The road sign may include a graphic or text road sign. The driving reference object may be a building or a plant. The obstacle on the road may include a dynamic object (for example, an animal, a pedestrian, or a driving vehicle) or a static object (for example, a static vehicle).

In a possible example, the training device 10 and the execution device 20 are different processors deployed on different physical devices (such as a server or a server in a cluster).

For example, the execution device 20 may be a neural network processing unit (neural network processing unit, NPU), a graphics processing unit (graphics processing unit, GPU), a central processing unit (central processing unit, CPU), another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, a discrete hardware component, or the like. The general-purpose processor may be a microprocessor or any conventional processor or the like.

The training device 10 may be a GPU, an NPU, a microprocessor, an ASIC, or one or more integrated circuits configured to control program execution of the solutions in this application.

It should be understood that FIG. 6 is merely a simplified example diagram for ease of understanding. During actual application, the foregoing system may further include another device, which is not shown in the figure.

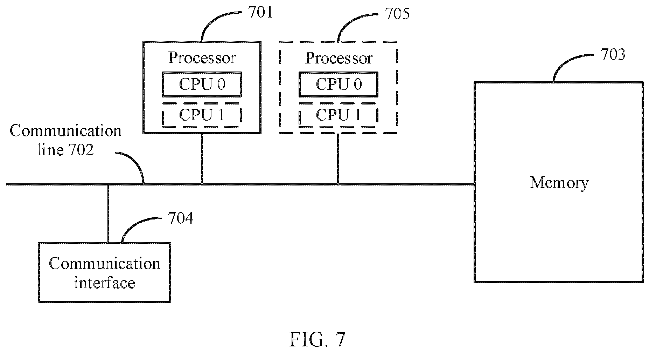

For example, the training device 10 in this embodiment of this application may be implemented by using different devices. For example, the training device 10 in this embodiment of this application may be implemented by using a communication device in FIG. 7. FIG. 7 is a schematic diagram of a hardware structure of the training device 10 according to an embodiment of this application. The training device 10 includes at least one processor 701, a communication line 702, a memory 703, and at least one communication interface 704.

The processor 701 may be a general-purpose CPU, a microprocessor, an ASIC, or one or more integrated circuits configured to control program execution in the solutions of this application.

The communication line 702 may include a path, to transfer information between the foregoing components.

The communication interface 704 is configured to communicate with another device. In this embodiment of this application, the communication interface 704 may be a module, a circuit, a bus, an interface, a transceiver, or another apparatus that can implement a communication function. Optionally, when the communication interface is a transceiver, the transceiver may be an independently disposed transmitter, and the transmitter may be configured to send information to another device. Alternatively, the transceiver may be an independently disposed receiver, and is configured to receive information from another device. Alternatively, the transceiver may be a component that integrates functions of sending and receiving information. Specific implementation of the transceiver is not limited in embodiments of this application.

The memory 703 may be a read-only memory (read-only memory, ROM) or another type of static storage device capable of storing static information and instructions, may be a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or another compact disc storage, optical disc storage (including a compact optical disc, a laser disc, an optical disc, a digital versatile disc, a Blu-ray disc, and the like), a magnetic disk storage medium or another magnetic storage device, or any other medium that can be used to carry or store expected program code in a form of an instruction or a data structure and that can be accessed by a computer. The memory 703 may exist independently and is connected to the processor 701 through the communication line 702. Alternatively, the memory 703 may be integrated with the processor 701.

The memory 703 is configured to store computer-executable instructions used to implement the solutions of this application. The processor 701 is configured to execute the computer-executable instructions stored in the memory 703, to implement a method provided in the following embodiments of this application.

Optionally, the computer-executable instructions in embodiments of this application may also be referred to as application code, instructions, a computer program, or another name. This is not specifically limited in embodiments of this application.

During specific implementation, in an embodiment, the processor 701 may include one or more CPUs, for example, a CPU 0 and a CPU 1 in FIG. 7.

During specific implementation, in an embodiment, the training device 10 may include a plurality of processors, for example, the processor 701 and a processor 705 in FIG. 7. Each of the processors may be a single-CPU (single-CPU) processor, or may be a multi-CPU (multi-CPU) processor. The processor herein may be one or more devices, circuits, and/or processing cores configured to process data (for example, computer program instructions).

The training device 10 may be a general-purpose device or a dedicated device. A type of the training device 10 is not limited in this embodiment of this application.

It may be understood that, the structure illustrated in this embodiment of this application constitutes no specific limitation on the training device 10. In some other embodiments of this application, the training device 10 may include more or fewer components than those shown in the figure, or some components may be combined, or some components may be split, or there may be a different component layout. The components shown in the figure may be implemented by hardware, software, or a combination of software and hardware.

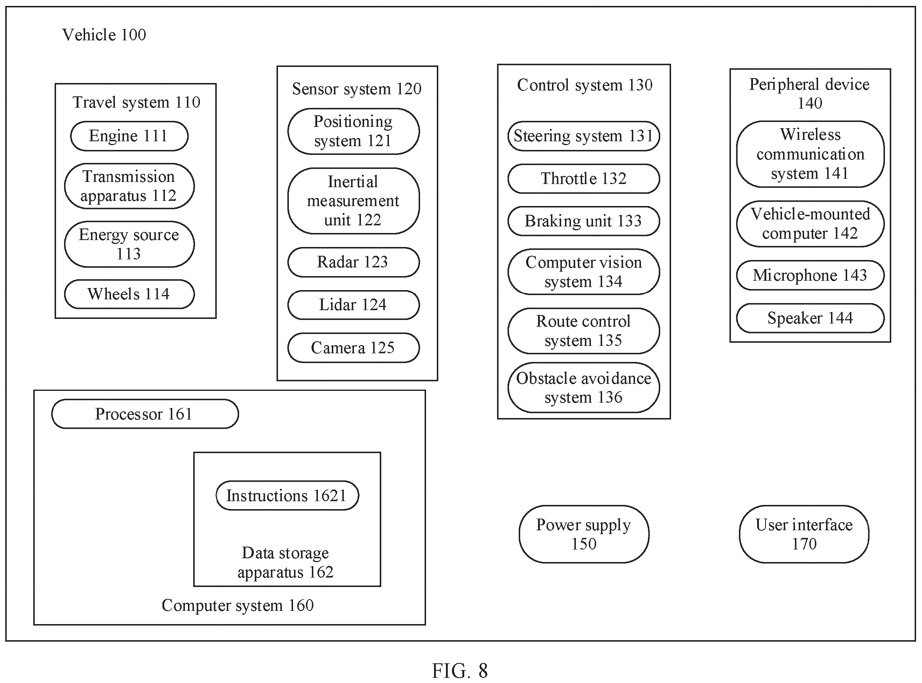

For example, the execution device 20 is an autonomous driving vehicle. FIG. 8 is a functional block diagram of a vehicle 100. In some embodiments, a trained recognition model is configured in the vehicle 100. In a driving process, the vehicle 100 may recognize an object in an environment by using the recognition model, to ensure that the vehicle 100 travels safely and accurately. For example, the object includes but is not limited to a road sign, a driving reference object, an obstacle on a road, and the like.

The vehicle 100 may include various sub-systems, for example, a travel system 110, a sensor system 120, a control system 130, one or more peripheral devices 140, a power supply 150, a computer system 160, and a user interface 170. Optionally, the vehicle 100 may include more or fewer sub-systems, and each sub-system may include a plurality of elements. In addition, the sub-systems and the elements of the vehicle 100 may be all interconnected in a wired or wireless manner.

The travel system 110 includes a component providing power to the vehicle 100 for moving. In an embodiment, the travel system 110 may include an engine 111, a transmission apparatus 112, an energy source 113, and wheels 114. The engine 111 may be an internal combustion engine, an electric motor, an air compression engine, or a combination of other types of engines, such as a hybrid engine including a gasoline engine and an electric motor, or a hybrid engine including an internal combustion engine and an air compression engine. The engine 111 converts the energy source 113 into mechanical energy.

Examples of the energy source 113 include gasoline, diesel, another oil-based fuel, propane, another compressed gas-based fuel, ethanol, a solar panel, a battery, and another power source. The energy source 113 may also provide energy for another system of the vehicle 100.

The transmission apparatus 112 may transmit mechanical power from the engine 111 to the wheels 114. The transmission apparatus 112 may include a gearbox, a differential, and a drive shaft. In an embodiment, the transmission apparatus 112 may further include another component, like a clutch. The drive shaft may include one or more shafts that may be coupled to the one or more wheels 114.

The sensor system 120 may include several sensors that sense information about an ambient environment of the vehicle 100. For example, the sensor system 120 may include a positioning system 121 (the positioning system may be a global positioning system (global positioning system, GPS), a BeiDou system, or another positioning system), an inertial measurement unit (inertial measurement unit, IMU) 122, a radar 123, a lidar 124, and a camera 125. Sensor data from one or more of these sensors may be used to detect an object and corresponding features (a position, a shape, a direction, a speed, and the like) of the object. Such detection and recognition are key functions of a safe operation of the vehicle 100.

The positioning system 121 may be configured to estimate a geographical position of the vehicle 100. The IMU 122 is configured to sense, based on an inertial acceleration, a position of the vehicle 100 and a change of an orientation of the vehicle 100. In an embodiment, the IMU 122 may be a combination of an accelerometer and a gyroscope.

The radar 123 may sense an object in the ambient environment of the vehicle 100 by using a radio signal. In some embodiments, in addition to sensing an object, the radar 123 may be further configured to sense a speed and/or a heading direction of the object.

The lidar 124 may use laser light to sense an object in an environment in which the vehicle 100 is located. In some embodiments, the lidar 124 may include one or more laser sources, a laser scanner, one or more detectors, and another system component.

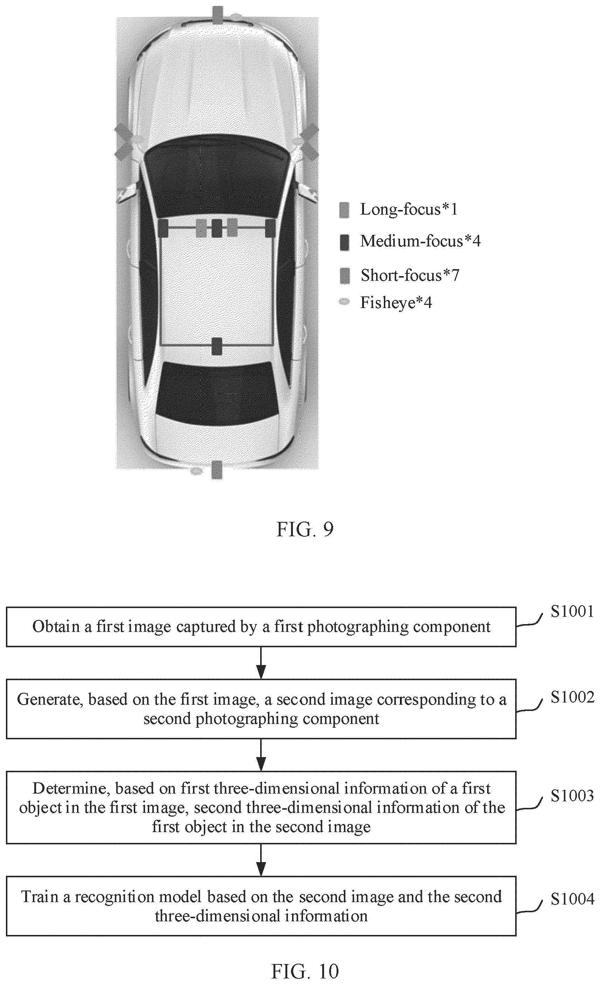

The camera 125 may be configured to capture a plurality of images of the ambient environment of the vehicle 100 and a plurality of images in a vehicle cockpit. The camera 125 may be a static camera or a video camera. In some embodiments of this application, the camera 125 may be a monocular camera. For example, the monocular camera includes but is not limited to a long-focus camera, a medium-focus camera, a short-focus camera, a fisheye camera, and the like. For example, FIG. 9 is a schematic diagram of the camera 125 deployed on the vehicle 100 according to an embodiment of this application. For example, the camera 125 may be deployed at various positions such as a head, a rear, two sides, and a top of the vehicle.

The control system 130 may control operations of the vehicle 100 and components of the vehicle 100. The control system 130 may include various elements such as a steering system 131, a throttle 132, a braking unit 133, a computer vision system 134, a route control system 135, and an obstacle avoidance system 136.

The steering system 131 may be operated to adjust a heading direction of the vehicle 100. For example, in an embodiment, the steering system 131 may be a steering wheel system.

The throttle 132 is configured to control an operating speed of the engine 111 and further control a speed of the vehicle 100.

The braking unit 133 is configured to control the vehicle 100 to decelerate.

The computer vision system 134 may be operated to process and analyze an image captured by the camera 125, to recognize an object and/or a feature in the ambient environment of the vehicle 100 and a body feature and a facial feature of a driver in the vehicle cockpit. The object and/or the feature may include a traffic signal, a road condition, and an obstacle, and the body feature and the facial feature of the driver include a behavior, a line of sight, an expression, and the like of the driver.

The route control system 135 is configured to determine a traveling route of the vehicle 100. In some embodiments, the route control system 135 may determine the traveling route of the vehicle 100 with reference to data from the sensor, the positioning system 121, and one or more predetermined maps.

The obstacle avoidance system 136 is configured to recognize, evaluate, and avoid or bypass, in another manner, a potential obstacle in an environment of the vehicle 100.

Certainly, in an example, the control system 130 may add or alternatively include components other than those shown and described. Alternatively, some of the components shown above may be omitted.

The vehicle 100 interacts with an external sensor, another vehicle, another computer system, or a user by using the peripheral device 140. The peripheral device 140 may include a wireless communication system 141, a vehicle-mounted computer 142, a microphone 143, and/or a speaker 144. In some embodiments, the peripheral device 140 provides a means for a user of the vehicle 100 to interact with the user interface 170.

The wireless communication system 141 may wirelessly communicate with one or more devices directly or through a communication network.

The power supply 150 may provide power to various components of the vehicle 100.

Some or all of functions of the vehicle 100 are controlled by the computer system 160. The computer system 160 may include at least one processor 161, and the processor 161 executes instructions 1621 stored in, for example, the data storage apparatus 162. The computer system 160 may alternatively be a plurality of computing devices that control an individual component or a sub-system of the vehicle 100 in a distributed manner.

The processor 161 may be any conventional processor, like a CPU, an ASIC, or another dedicated device of a hardware-based processor. Although FIG. 8 functionally shows the processor, the data storage apparatus, and other elements in a same physical housing, a person of ordinary skill in the art should understand that the processor, the computer system, or the data storage apparatus actually includes a plurality of processors, computer systems, or data storage apparatuses that may be stored in a same physical housing, or includes a plurality of processors, computer systems, or data storage apparatuses that may be stored in different physical housings. For example, the data storage apparatus may be a hard disk drive, or another storage medium located in a different physical housing. Therefore, references to the processor or the computer system will be understood as including references to a set of processors or computer systems or data storage apparatuses that may be operated in parallel, or references to a set of processors or computer systems or data storage apparatuses that may not be operated in parallel. Different from using a single processor to perform the steps described herein, some components, such as a steering component and a deceleration component, each may have its own processor, and the processor performs only calculation related to a component-specific function.

In various aspects described herein, the processor may be located away from the vehicle and wirelessly communicate with the vehicle. In another aspect, some processes described herein are performed on a processor disposed inside the vehicle, while other processes are performed by a remote processor, including performing a step necessary for single manipulation.

In some embodiments, the data storage apparatus 162 may include the instructions 1621 (for example, program logic), and the instructions 1621 may be executed by the processor 161 to perform various functions of the vehicle 100, including the functions described above. The data storage apparatus 162 may further include additional instructions, including instructions to send data to, receive data from, interact with, and/or control one or more of the travel system 110, the sensor system 120, the control system 130, and the peripheral device 140.

In addition to the instructions 1621, the data storage apparatus 162 may further store data, such as a road map, route information, and a position, a direction, a speed, and other such vehicle data of the vehicle, and other information. Such information may be used by the vehicle 100 and the computer system 160 when the vehicle 100 operates in an autonomous mode, a semi-autonomous mode, and/or a manual mode. Optionally, in some embodiments of this application, the data storage apparatus 162 stores a trained recognition model.

For example, in a possible embodiment, the data storage apparatus 162 may obtain an image that is in an ambient environment and that is captured by the vehicle based on the camera 125 in the sensor 120, and obtain 3D information of each obstacle in the image by using the stored recognition model.

The user interface 170 is configured to provide information to or receive information from a user of the vehicle 100. Optionally, the user interface 170 may interact with one or more input/output devices in a set of peripheral devices 140, such as one or more of the wireless communication system 141, the vehicle-mounted computer 142, the microphone 143, and the speaker 144.

The computer system 160 may control the vehicle 100 based on information obtained from various sub-systems (for example, the travel system 110, the sensor system 120, and the control system 130) and information received from the user interface 170.

Optionally, one or more of the foregoing components may be mounted in separation from or associated with the vehicle 100. For example, the data storage apparatus 162 may be partially or completely separated from the vehicle 100. The foregoing components may be coupled together for communication in a wired and/or wireless manner.

Optionally, the foregoing components are merely examples. During actual application, components in the foregoing modules may be added or removed according to an actual requirement. FIG. 8 should not be construed as a limitation on this embodiment of this application.

The vehicle 100 may be a car, a truck, a motorcycle, a bus, a boat, an airplane, a helicopter, a lawn mower, a recreational vehicle, a playground vehicle, a construction device, a tram, a golf cart, a train, a trolley, or the like. This is not specifically limited in embodiments of this application.

In some other embodiments of this application, the autonomous driving vehicle may further include a hardware structure and/or a software module, and implement the functions in a form of the hardware structure, the software module, or both the hardware structure and the software module. Whether a function in the foregoing functions is performed by using the hardware structure, the software module, or the combination of the hardware structure and the software module depends on particular applications and design constraints of the technical solutions.

For example, FIG. 10 shows a recognition model training method according to an embodiment of this application. The method may be performed by the training device 10 shown in FIG. 6, or a processor in the training device 10, for example, the processor shown in FIG. 7. The method includes the following steps.

S1001: Obtain a first image captured by a first photographing component.

The first photographing component corresponds to a first angle of view, that is, the first image is an image corresponding to the first angle of view. For example, the first photographing component may be a monocular camera, and the monocular camera includes but is not limited to a long-focus camera, a medium-focus camera, a short-focus camera, a fisheye camera, or the like. Optionally, the first photographing camera may alternatively be another apparatus having an image capturing function. In this embodiment of this application, the first photographing component may alternatively be referred to as an image capturing apparatus, a sensor, or the like. It may be understood that a name of the first photographing component does not constitute a limitation on a function of the first photographing component.

S1002: Generate, based on the first image, a second image corresponding to a second photographing component.

The second photographing component may be determined based on the first photographing component, and the second photographing component corresponds to a second angle of view, that is, the second image is an image corresponding to the second angle of view. The first angle of view is different from the second angle of view, that is, a photographing angle corresponding to the first photographing component is different from a photographing angle corresponding to the second photographing component. In other words, the first image is different from the second image.

In a possible implementation, the first photographing component is a virtual photographing component. Before step S1002, a coordinate system of the first photographing component may be rotated by a preset angle to obtain the second photographing component. In other words, the coordinate system of the first photographing component is rotated by the preset angle to obtain a new coordinate system, and a photographing component corresponding to the new coordinate system is used as the second photographing component.

Optionally, an extrinsic parameter between the second photographing component and the first photographing component may be determined based on one or more of a preset rotation angle, a rotation direction, and the like. It may be understood that the extrinsic parameter is a conversion relationship between two coordinate systems. Therefore, the extrinsic parameter between the second photographing component and the first photographing component may also be described as a coordinate conversion relationship (or referred to as a coordinate system conversion relationship) between the second photographing component and the first photographing component.

In some embodiments, the extrinsic parameter between the second photographing component and the first photographing component is a rotation matrix related to the preset angle. The following describes the extrinsic parameter between the second photographing component and the first photographing component by using an example in which the coordinate system of the first photographing component is the coordinate system shown in (1) in FIG. 2.

In a possible example, the coordinate system of the first photographing component is rotated around an x-axis in the coordinate system of the first photographing component by the preset angle to obtain the second photographing component. In this case, the extrinsic parameter between the second photographing component and the first photographing component may be represented as Formula 1.

$$X = \begin{bmatrix} 1 & 0 & 0 \\ 0 & \cos(\omega) & -\sin(\omega) \\ 0 & \sin(\omega) & \cos(\omega) \end{bmatrix} \quad \text{Formula 1}$$

In Formula 1, $X$ represents the extrinsic parameter between the second photographing component and the first photographing component, $\omega$ represents the preset rotation angle, and 0 degrees$\leq \omega \leq$360 degrees.

Optionally, an error may exist in a parameter (for example, one or more of $\cos(\omega)$, $\sin(\omega)$, and $-\sin(\omega)$) in Formula 1. Therefore, in this example, the extrinsic parameter between the second photographing component and the first photographing component may alternatively be represented as Formula 1a.

$$X = \begin{bmatrix} 1 & 0 & 0 \\ 0 & \cos(\omega)+v & -\sin(\omega)+u \\ 0 & \sin(\omega)+u & \cos(\omega)+v \end{bmatrix} \quad \text{Formula 1a}$$

In Formula 1a, $v$ and $u$ are both preset constants, and may be used to eliminate an error of a corresponding parameter. It may be understood that constants used to eliminate errors of the parameters may be the same, for example, values of $v$ and $u$ may be the same; or may be different, for example, values of $v$ and $u$ may be different. Certainly, an overall error of Formula 1 may alternatively be eliminated by using an error matrix. For example, the error matrix may be a matrix of $3\times3$, and each element in the matrix is a preset constant. In other words, a representation form of the preset constant used to eliminate the error of Formula 1 is not limited in this application, and a position of the preset constant added to Formula 1 is not limited.

In another possible example, the coordinate system of the first photographing component is rotated around a y-axis in the coordinate system of the first photographing component by the preset angle to obtain the second photographing component. In this case, the extrinsic parameter between the second photographing component and the first photographing component may be represented as Formula 2.

$$X = \begin{bmatrix} \cos(\omega) & 0 & \sin(\omega) \\ 0 & 1 & 0 \\ -\sin(\omega) & 0 & \cos(\omega) \end{bmatrix} \quad \text{Formula 2}$$

For descriptions of the parameters in Formula 2, refer to descriptions of corresponding parameters in Formula 1.

In still another possible example, the coordinate system of the first photographing component is rotated around a z-axis of the first photographing component by the preset angle to obtain the second photographing component. In this case, the extrinsic parameter between the second photographing component and the first photographing component may be represented as Formula 3.

$$X = \begin{bmatrix} \cos(\omega) & -\sin(\omega) & 0 \\ \sin(\omega) & \cos(\omega) & 0 \\ 0 & 0 & 1 \end{bmatrix} \quad \text{Formula 3}$$

For descriptions of the parameters in Formula 3, refer to descriptions of corresponding parameters in Formula 1.

It may be understood that, in the foregoing examples, the coordinate system of the first photographing component is rotated around one coordinate axis in the coordinate system of the first photographing component to obtain the second photographing component. Alternatively, the coordinate system of the first photographing component may be rotated around a plurality of coordinate axes in the coordinate system of the first photographing component to obtain the second photographing component. For example, rotation around the x-axis by a specific angle is first performed, and then rotation around the y-axis by a specific angle is performed. For another example, rotation around the z-axis by a specific angle is first performed, and then rotation around the x-axis by a specific angle is performed. For another example, rotation around the y-axis by a specific angle is first performed, then rotation around the x-axis by a specific angle is performed, and finally rotation around the z-axis by a specific angle is performed. Optionally, rotation around one coordinate axis may be performed one or more times, for example, rotation around the x-axis by a specific angle is first performed, then rotation around the y-axis by a specific angle is performed, and then rotation around the x-axis by a specific angle is performed. Optionally, the angles of the three times of rotation may be the same or may be different.

When the coordinate system of the first photographing component is rotated around the plurality of coordinate axes in the coordinate system of the first photographing component to obtain the second photographing component, the extrinsic parameter between the second photographing component and the first photographing component may be represented by multiplying a plurality of the foregoing Formula 1, Formula 2, and Formula 3. For example, rotation around the x-axis by a specific angle is first performed, and then rotation around the y-axis by a specific angle is performed. The extrinsic parameter between the second photographing component and the first photographing component may be represented by multiplying the foregoing Formula 1 and the Foregoing formula 2, for example, represented as Formula 4.

$$X = \begin{bmatrix} 1 & 0 & 0 \\ 0 & \cos(\beta) & -\sin(\beta) \\ 0 & \sin(\beta) & \cos(\beta) \end{bmatrix} \times \begin{bmatrix} \cos(\lambda) & 0 & \sin(\lambda) \\ 0 & 1 & 0 \\ -\sin(\lambda) & 0 & \cos(\lambda) \end{bmatrix} \quad \text{Formula 4}$$

In Formula 4, $X$ represents the extrinsic parameter between the second photographing component and the first photographing component. $\beta$ represents an angle of rotation around the x-axis, and 0 degrees$\leq \beta \leq$360 degrees. $\lambda$ represents an angle of rotation around the y-axis, and 0 degrees$\leq \lambda \leq$360 degrees. $\beta$ and $\lambda$ may be the same or may be different. Optionally, the preset angle (namely, the foregoing $\alpha$) may be determined based on an angle of rotation around each coordinate axis. For example, in this example, the preset angle may be determined based on $\beta$ and $\lambda$. In some examples, the preset angle may be a sum of $\beta$ and $\lambda$.

Similarly, when the second photographing component is obtained through rotation around a plurality of other coordinate axes for one or more times, for representation of the extrinsic parameter between the second photographing component and the first photographing component, refer to the foregoing implementation. Details are not described herein again.

Similarly, errors of parameters in Formula 2, Formula 3, and Formula 4 may alternatively be eliminated by adding a preset constant. For specific implementation, refer to related implementation of Formula 1a. Examples are not described herein again.

Optionally, the coordinate system of the first photographing component may not be rotated around a coordinate axis in the coordinate system of the first photographing component, but may be rotated around another direction, to obtain the second photographing component. In other words, in this embodiment of this application, the coordinate system of the first photographing component may be rotated by any angle in any direction, to obtain the second photographing component. This is not limited in this application.

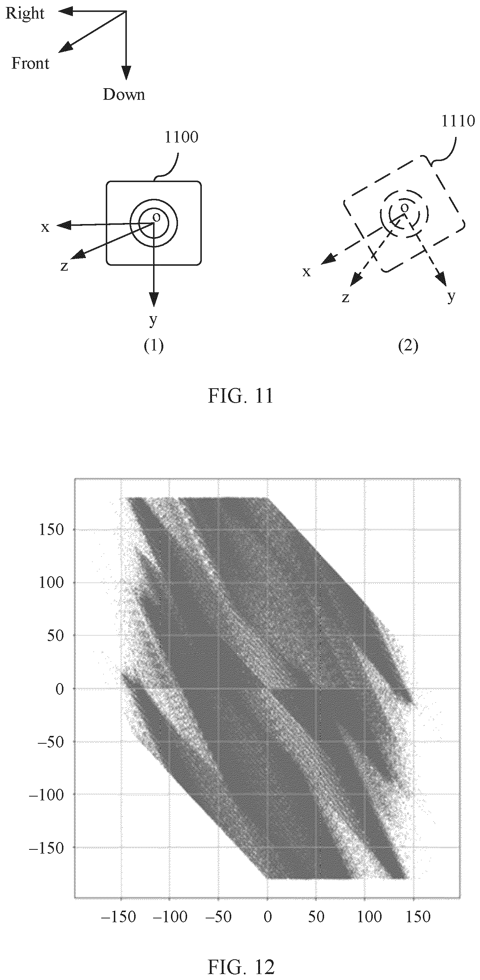

For example, with reference to the coordinate system of the monocular camera shown in (1) in FIG. 2, the coordinate system of the first photographing component 1100 may be shown in (1) in FIG. 11. For example, the coordinate system shown in (1) in FIG. 11 is rotated leftward by N degrees, to obtain a new coordinate system, where N is a positive number. For example, the new coordinate system may be a coordinate system shown in (2) in FIG. 11, and a photographing component (a photographing component 1110 shown in (2) in FIG. 11) corresponding to the coordinate system shown in (2) in FIG. 11 is the second photographing component.

Optionally, a manner of setting the coordinate system of the second photographing component may be the same as a manner of setting the coordinate system of the first photographing component. For example, an optical center of the photographing component is used as an origin of the coordinate system, and a line-of-sight direction of the photographing component is used as a z-axis direction. Alternatively, a manner of setting the coordinate system of the second photographing component may be different from a manner of setting the coordinate system of the first photographing component. For example, origins of the coordinate systems are different, and coordinate axes are set differently. This is not limited in this application.

In another possible implementation, the coordinate system of the first photographing component and the coordinate system of the second photographing component may be coordinate systems of a same type, for example, both are spatial rectangular coordinate systems, or may be coordinate systems of different types.

In some possible implementations, intrinsic parameters (intrinsics) of the first photographing component and the second photographing component are the same. For example, the intrinsic parameter of the first photographing component is directly used as the intrinsic parameter of the second photographing component. Alternatively, intrinsic parameters of the first photographing component and the second photographing component are different. For example, an intrinsic parameter different from that of the first photographing component is set for the second photographing component. Optionally, distortion coefficients of the first photographing component and the second photographing component may be the same or may be different. For detailed descriptions of the intrinsic parameter and the distortion coefficient of the photographing component, refer to descriptions of the intrinsic parameter and the distortion coefficient of the camera in the conventional technology. Details are not described in this application again.

S1003: Determine, based on first three-dimensional information of a first object in the first image, second three-dimensional information of the first object in the second image.

Optionally, the first three-dimensional information of the first object in the first image is three-dimensional information of the first object in the coordinate system of the first photographing component, and the second three-dimensional information of the first object in the second image is three-dimensional information of the first object in the coordinate system of the second photographing component.

Optionally, the second three-dimensional information of the first object may be determined based on the first three-dimensional information of the first object and a coordinate conversion relationship between the first photographing component and the second photographing component. It may be understood that the coordinate conversion relationship between the first photographing component and the second photographing component may also be described as the extrinsic parameter between the first photographing component and the second photographing component.

Optionally, before step S1003, the method shown in FIG. 10 may further include the following steps S1003a and S1003b (not shown in the figure).

S1003a: Obtain point cloud data that corresponds to the first image and that is collected by a sensor.

The point cloud data includes third three-dimensional information of the first object. Optionally, the third three-dimensional information of the first object is three-dimensional information in a coordinate system of the sensor. For example, the sensor may be a sensor configured to collect point cloud data, like a lidar.

Optionally, in this embodiment of this application, the first three-dimensional information, the second three-dimensional information, or the third three-dimensional information includes one or more of the following: three-dimensional coordinates, a size, an orientation angle, and the like.

S1003b: Determine the first three-dimensional information based on the third three-dimensional information and a coordinate conversion relationship between the first photographing component and the sensor.

It may be understood that the coordinate conversion relationship between the first photographing component and the sensor may also be described as the extrinsic parameter between the first photographing component and the sensor.

S1004: Train a recognition model based on the second image and the second three-dimensional information.

The recognition model is used to recognize an object in an image captured by the first photographing component.

Optionally, in the training process, the recognition model may further project, based on the intrinsic parameter, the distortion coefficient, and the like, of the second photographing component, the second three-dimensional information of the first object onto a pixel of the second image, to train the recognition model. For descriptions of an imaging principle herein, refer to descriptions in the conventional technology. Details are not described in this application again.

For example, the second three-dimensional information is an orientation angle. With reference to the foregoing definition of the orientation angle, the orientation angle is usually obtained by adding up $\theta$ and $\alpha$. For example, FIG. 12 is a diagram of distribution of obtained $\theta$ and $\alpha$ of an object according to an embodiment of this application. As shown in FIG. 12, a horizontal coordinate represents $\theta$, and a vertical coordinate represents $\alpha$. It can be seen from FIG. 12 that $\theta$ and $\alpha$ are unevenly distributed.

Based on the foregoing technical solution, an image corresponding to the second photographing component is generated by using the image captured by the first photographing component, and the second photographing component may be determined based on the first photographing component. In this way, images at different angles of view of the first photographing component can be obtained, so that obtained image data is abundant. Based on three-dimensional information of the object in the image captured by the first photographing component, three-dimensional information of the object in the image corresponding to the second photographing component is determined, to obtain three-dimensional information of the object in the images at different angles of view of the first photographing component, and further obtain more evenly-distributed three-dimensional information. Then, the recognition model is trained by using the more evenly-distributed three-dimensional information. This can reduce impact of uneven training data distribution on a prediction result of the recognition model. Subsequently, when the recognition model is used to detect an object, obtained three-dimensional information of the object is more accurate.

In some embodiments, if there are a plurality of first photographing components, each first photographing component may correspond to one recognition model. For example, for each first photographing component, a recognition model training apparatus may determine, based on the first photographing component, a second photographing component corresponding to the first photographing component, to train the recognition model corresponding to the first photographing component. Subsequently, a recognition model corresponding to each first photographing component is used to recognize only an object in an image captured by the corresponding first photographing component.

In some other embodiments, if there are a plurality of first photographing components, the plurality of first photographing components may correspond to one recognition model. For example, for the plurality of first photographing components, the model training apparatus may determine, based on the plurality of first photographing components, a corresponding second photographing component, to train the recognition model corresponding to the plurality of first photographing components. Subsequently, the recognition model obtained through training may be used to recognize objects in images captured by the plurality of first photographing components corresponding to the recognition model. For example, the recognition model training apparatus may generate, by using the method described in FIG. 10, an image corresponding to the second photographing component based on the images captured by the plurality of first photographing components, where the second photographing component is determined based on the plurality of first photographing components. Similarly, second three-dimensional information of the object in the image corresponding to the second photographing component is separately determined based on first three-dimensional information of the object in the images captured by the plurality of first photographing components. The recognition model is trained based on the image corresponding to the second photographing component and the second three-dimensional information of the object in the image corresponding to the second photographing component.

Based on the solution in this embodiment, both an image captured by each first photographing component and first three-dimensional information of an object in the image may be used to train a same recognition model. This increases training data for training the recognition model, improves data utilization, and reduces costs of collecting the training data. In addition, training one recognition model is applicable to a plurality of first photographing components. In other words, one training model may recognize objects in images captured by the plurality of first photographing components. In this way, there is no need to train a recognition model for each first photographing component, so that training costs are reduced.

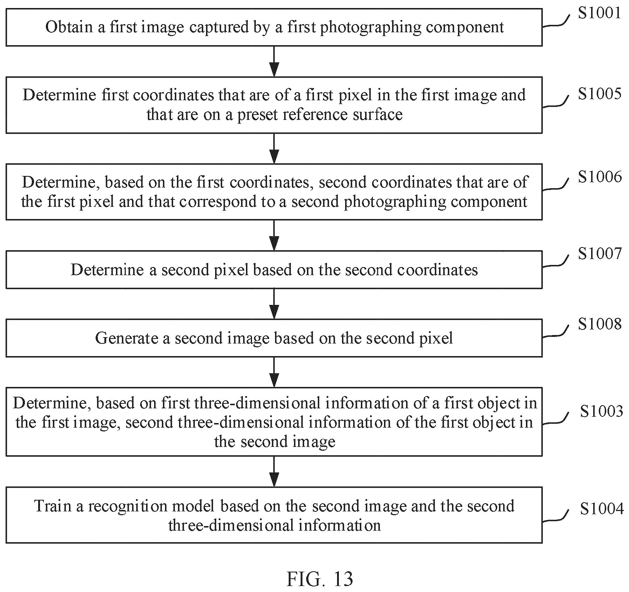

Optionally, in a possible implementation, step S1002 shown in FIG. 10 may be specifically implemented as step S1005 to step S1008 shown in FIG. 13.

S1005: Determine first coordinates that are of a first pixel in the first image and that are on a preset reference surface.

Optionally, the preset reference surface may be a spherical surface that uses an optical center of the first photographing component as a sphere center.

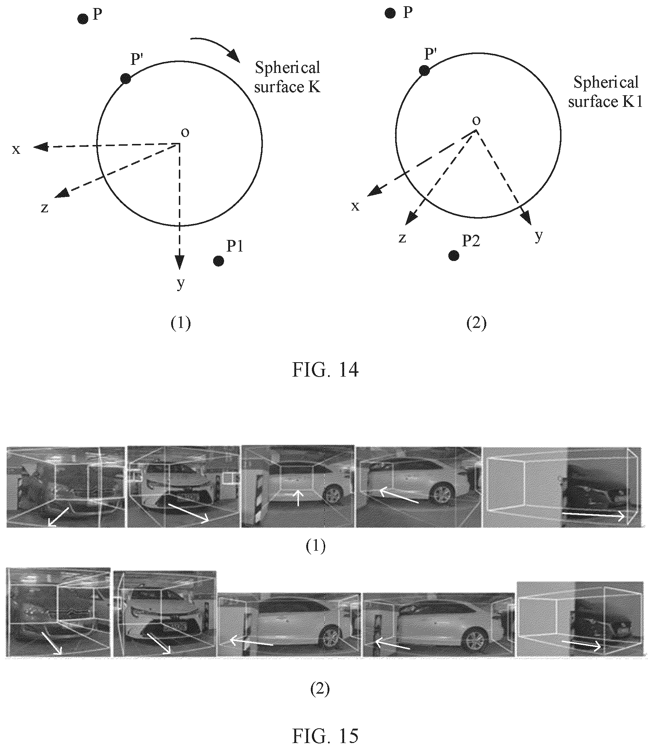

For example, FIG. 14 is a schematic diagram of a preset reference surface according to an embodiment of this application. As shown in (1) in FIG. 14, the preset reference surface may be a spherical surface K that uses an optical center of the first photographing component as a sphere center, namely, a spherical surface K that uses an origin o of a coordinate system of the first photographing component as a sphere center.

Optionally, the preset reference surface may alternatively be set in another manner, for example, may be a spherical surface using a point that is at a preset distance from the optical center of the first photographing component as a sphere center, or a spherical surface that uses another position of the first photographing component as a sphere center. A specific manner of setting the preset reference surface is not limited in this application. Optionally, the preset reference surface may be a plane or a curved surface. This is not limited in this application either.

It may be understood that there is a mapping relationship between a point in the coordinate system of the first photographing component and a pixel in the first image. A point P in the coordinate system of the first photographing component is used as an example. It may be determined, based on an imaging principle, an intrinsic parameter, a distortion coefficient, and the like of the first photographing component, that a pixel that is in the first image and that corresponds to the point P is a point P1.

The point P is normalized to the spherical surface K. As shown in (1) in FIG. 14, a point normalized from the point P to the spherical surface K is a point P'. Because a correspondence exists between the point P and the point P1, and a correspondence also exists between the point P and the point P', a correspondence also exists between the point P' and the point P1. It should be understood that any point in the coordinate system of the first photographing component may be normalized to a corresponding point on the spherical surface K. For different points in the coordinate system of the first photographing component, points normalized to the spherical surface K may be the same. The points normalized to the spherical surface K are in a one-to-one correspondence with pixels in the first image. For example, the first pixel is the point P1. In this case, the first coordinates of the first pixel on the preset reference surface are coordinates of the point P' in the coordinate system of the first photographing component, namely, coordinates of the point P' in the coordinate system shown in (1) in FIG. 14.

Optionally, the first pixel may be any pixel in the first image, and for each pixel in the first image, first coordinates on the preset reference surface may be determined based on this step. Optionally, the first pixel may alternatively be a pixel obtained by performing difference processing on a pixel in the first image. The first pixel is not limited in this application. The difference processing is the conventional technology. For details, refer to the existing solution. Details are not described in this specification.

S1006: Determine, based on the first coordinates, second coordinates that are of the first pixel and that correspond to the second photographing component.

With reference to the implementation in FIG. 11, the second photographing component may be obtained by rotating the coordinate system of the first photographing component by a preset angle. Therefore, when the second photographing component is obtained by rotating the coordinate system of the first photographing component by the preset angle, the spherical surface K shown in (1) in FIG. 14 is also rotated by the preset angle, to obtain the spherical surface K1 shown in (2) in FIG. 14. However, in a camera coordinate system, shown in (1) in FIG. 14, of the first photographing component, the point P remains unchanged in position while normalized to a point on the spherical surface K1 shown in (2) in FIG. 14. However, because a coordinate system, shown in (2) in FIG. 14, of the second photographing component is different from a coordinate system, shown in (1) in FIG. 14, of the first photographing component, coordinates of the point P' shown in (2) in FIG. 14 in the coordinate system (the coordinate system shown in (2) in FIG. 14) of the second photographing component are second coordinates.

In some embodiments, second coordinates that are of the first pixel and that correspond to the second photographing component may be determined based on the first coordinates and the extrinsic parameter between the second photographing component and the first photographing component.

In a possible implementation, for example, the extrinsic parameter between the second photographing component and the first photographing component is a rotation matrix related to the preset angle. A second coordinate system corresponding to the first pixel and the second photographing component may be obtained by left-multiplying the first coordinates by the rotation matrix.

For example, if the rotation matrix is the matrix in Formula 1, the second coordinates that are of the first pixel and that correspond to the second photographing component may be represented as Formula 5.

$$\begin{bmatrix} x2 \\ y2 \\ z2 \end{bmatrix} = \begin{bmatrix} 1 & 0 & 0 \\ 0 & \cos(\alpha) & -\sin(\alpha) \\ 0 & \sin(\alpha) & \cos(\alpha) \end{bmatrix} \times \begin{bmatrix} x1 \\ y1 \\ z1 \end{bmatrix} \quad \text{Formula 5}$$

In Formula 5, $\begin{bmatrix} x2 \\ y2 \\ z2 \end{bmatrix}$ are the second coordinates (x2, y2, z2) that are of the first pixel and that correspond to the

second photographing component, $\begin{bmatrix} x1 \\ y1 \\ z1 \end{bmatrix}$ are the first coordinates (x1, y1, z1), and $\begin{bmatrix} 1 & 0 & 0 \\ 0 & \cos(\alpha) & -\sin(\alpha) \\ 0 & \sin(\alpha) & \cos(\alpha) \end{bmatrix}$ is the rotation matrix.

Similarly, an error of a parameter in Formula 5 may alternatively be eliminated by adding a preset constant. For specific implementation, refer to related implementation of Formula 1a. Examples are not described herein again.

Similarly, when the rotation matrix is in another form (for example, the matrix in Formula 2 to Formula 4), for representation of the second coordinates that are of the first pixel and that correspond to the second photographing component, refer to implementation of Formula 5. An example is not described herein again.

S1007: Determine a second pixel based on the second coordinates.

Similarly, there is also a correspondence between a point on the spherical surface K1 and a pixel in the second image corresponding to the second photographing component. Based on an imaging principle, the point on the spherical surface K1 may be mapped to the pixel in the second image. For example, the second coordinates are coordinates that are of the point P' shown in (2) in FIG. 14 and that are in the coordinate system shown in (2) in FIG. 14. In this case, the second pixel is P2.

It may be understood that, for each first pixel in the first image, a corresponding second pixel may be determined based on the solution in this embodiment of this application.

S1008: Generate a second image based on the second pixel.

For example, the second image may be generated based on the second pixel by invoking a remap function of an open source image processing library (open source computer vision library, OpenCV).

For descriptions of other steps in FIG. 13, refer to descriptions of corresponding steps in FIG. 10.

For example, (1) in FIG. 15 is a schematic diagram of an orientation that is of an object and that is obtained through prediction by using a recognition model trained in an existing solution, and (2) in FIG. 15 is a schematic diagram of an orientation that is of an object obtained by using a recognition model obtained through training according to an embodiment of this application. A vehicle shown in FIG. 15 is an object, a white rectangular box of each vehicle is a 3D box marked by 3D information of the vehicle that is predicted based on the recognition model, and a direction of a white arrow is a direction of a vehicle head, namely, an orientation of the vehicle. It can be learned from FIG. 15 that, in this embodiment of this application, accuracy that is of an orientation of an object and that is obtained by using the recognition model obtained through training is higher than accuracy of an orientation that is of a corresponding object and that is predicted by using a model trained in an existing solution.

The foregoing mainly describes the solutions provided in embodiments of this application from a perspective of the method. It may be understood that, to implement the foregoing functions, the recognition model training apparatus includes a hardware structure and/or a software module for performing a corresponding function. With reference to the units and algorithm steps described in embodiments disclosed in this application, embodiments of this application can be implemented in a form of hardware or hardware and computer software. Whether a function is performed by hardware or hardware driven by a computer depends on particular applications and design constraints of the technical solutions. A person skilled in the art may use different methods to implement the described functions for each particular application, but it should not be considered that the implementation falls beyond the scope of the technical solutions in embodiments of this application.

In embodiments of this application, the recognition model training apparatus may be divided into functional modules based on the foregoing method embodiment. For example, each functional module may be obtained through division based on each corresponding function, or two or more functions may be integrated into one processing unit. The integrated unit may be implemented in a form of hardware, or may be implemented in a form of a software functional module. It should be noted that, in this embodiment of this application, division into the units is an example, and is merely a logical function division. During actual implementation, another division manner may be used.

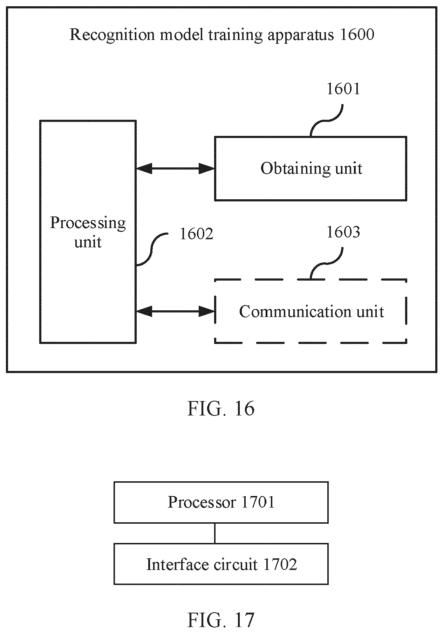

FIG. 16 is a schematic diagram of a structure of a recognition model training apparatus according to an embodiment of this application. The recognition model training apparatus 1600 may be configured to implement the methods recorded in the foregoing method embodiments. Optionally, the recognition model training apparatus may be the training device 10 shown in FIG. 6, or may be a module (for example, a chip) used in a server. The server may be located on a cloud. For example, the recognition model training apparatus 1600 may specifically include an obtaining unit 1601 and a processing unit 1602.

The obtaining unit 1601 is configured to support the recognition model training apparatus 1600 in performing step S1001 in FIG. 10. In addition/Alternatively, the obtaining unit 1601 is configured to support the recognition model training apparatus 1600 in performing step S1001 in FIG. 13. In addition/Alternatively, the obtaining unit 1601 is further configured to support the recognition model training apparatus 1600 in performing other steps performed by the recognition model training apparatus in this embodiment of this application.

The processing unit 1602 is configured to support the recognition model training apparatus 1600 in performing step S1002 to step S1004 in FIG. 10. In addition/Alternatively, the processing unit 1602 is further configured to support the recognition model training apparatus 1600 in performing step S1005 to step S1008 and step S1003 to step S1004 in FIG. 13. In addition/Alternatively, the processing unit 1602 is further configured to support the recognition model training apparatus 1600 in performing other steps performed by the recognition model training apparatus in this embodiment of this application.

Optionally, the recognition model training apparatus 1600 shown in FIG. 16 may further include a communication unit 1603. The communication unit 1603 is configured to support the recognition model training apparatus 1600 in performing a step of communication between the recognition model training apparatus and another device in this embodiment of this application.

Optionally, the recognition model training apparatus 1600 shown in FIG. 16 may further include a storage unit (not shown in FIG. 16), and the storage unit stores a program or instructions. When the processing unit 1602 executes the program or the instructions, the recognition model training apparatus 1600 shown in FIG. 16 can perform the method in the foregoing method embodiment.

For technical effect of the recognition model training apparatus 1600 shown in FIG. 16, refer to the technical effect described in the foregoing method embodiment. Details are not described herein again. The processing unit 1602 in the recognition model training apparatus 1600 shown in FIG. 16 may be implemented by a processor or a processor-related circuit component, and may be a processor or a processing module. The communication unit 1603 may be implemented by a transceiver or a transceiver-related circuit component, and may be a transceiver or a transceiver module.

An embodiment of this application further provides a chip system. As shown in FIG. 17, the chip system includes at least one processor 1701 and at least one interface circuit 1702. The processor 1701 and the interface circuit 1702 may be interconnected by using a line. For example, the interface circuit 1702 may be configured to receive a signal from another apparatus. For another example, the interface circuit 1702 may be configured to send a signal to another apparatus (for example, the processor 1701). For example, the interface circuit 1702 may read instructions stored in the memory, and send the instructions to the processor 1701. When the instructions are executed by the processor 1701, the recognition model training apparatus may be enabled to perform steps performed by the recognition model training apparatus in the foregoing embodiment. Certainly, the chip system may further include another discrete device. This is not specifically limited in embodiments of this application.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor like a read-only memory ROM. The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated circuit (application-specific integrated circuit, ASIC), a system on a chip (system on a chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

It should be understood that the steps in the foregoing method embodiment may be completed by using an integrated logic circuit of hardware in the processor or instructions in a form of software. The steps of the method disclosed with reference to embodiments of this application may be directly performed by a hardware processor, or may be performed through a combination of hardware in the processor and a software module.

An embodiment of this application further provides an electronic device. The electronic device includes the recognition model in the foregoing method embodiment. Optionally, the electronic device may be the foregoing execution device.

In a possible design, the electronic device further includes the first photographing component in the foregoing method embodiment.

An embodiment of this application further provides a computer storage medium. The computer storage medium stores computer instructions. When the computer instructions are run on a recognition model training apparatus, the recognition model training apparatus is enabled to perform the method in the foregoing method embodiment.

An embodiment of this application provides a computer program product. The computer program product includes a computer program or instructions. When the computer program or the instructions is or are run on a computer, the computer is enabled to perform the method in the foregoing method embodiment.

An embodiment of this application provides a mobile intelligent device, including a first photographing component and the recognition model training apparatus described in the foregoing embodiment. The first photographing component is configured to: capture a first image, and transmit the first image to the recognition model training apparatus.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, to enable the apparatus to perform the methods in the foregoing method embodiments.

The recognition model training apparatus, the mobile intelligent device, the computer storage medium, the computer program product, or the chip provided in embodiments is configured to perform the corresponding method provided above. Therefore, for beneficial effect that can be achieved by the recognition model training apparatus, the mobile intelligent device, the computer storage medium, the computer program product, or the chip, refer to the beneficial effect in the corresponding method provided above. Details are not described herein again.

Based on the foregoing descriptions of the implementations, a person skilled in the art may understand that for the purpose of convenient and brief description, division into the foregoing functional modules is merely used as an example for illustration. During actual application, the foregoing functions can be allocated to different functional modules for implementation according to a requirement, that is, an inner structure of an apparatus is divided into different functional modules to implement all or a part of the functions described above.

In the several embodiments provided in this application, it should be understood that the disclosed apparatus and method may be implemented in other manners. The embodiments may be combined or referenced with each other without conflict. The described apparatus embodiment is merely an example. For example, division into the modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected according to an actual requirement to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, like a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

**1.** A recognition model training method, wherein the method comprises:

obtaining a first image captured by a first photographing component, wherein the first photographing component corresponds to a first angle of view;

generating, based on the first image, a second image corresponding to a second photographing component, wherein the second photographing component is determined based on the first photographing component, and the second photographing component corresponds to a second angle of view;

determining, based on first three-dimensional information of a first object in the first image, second three-dimensional information of the first object in the second image; and

training a recognition model based on the second image and the second three-dimensional information, wherein the recognition model is used to recognize an object in an image captured by the first photographing component.

2. The method according to claim 1, wherein the second photographing component is a virtual photographing component, and before the generating, based on the first image, a second image corresponding to a second photographing component, the method further comprises:
rotating a coordinate system of the first photographing component by a preset angle to obtain the second photographing component.

3. The method according to claim 1 or 2, wherein

intrinsic parameters of the first photographing component and the second photographing component are the same; or
intrinsic parameters of the first photographing component and the second photographing component are different.

4. The method according to any one of claims 1 to 3, wherein the generating, based on the first image, a second image corresponding to a second photographing component comprises:

determining first coordinates that are of a first pixel in the first image and that are on a preset reference surface, wherein the first pixel is any pixel in the first image;
determining, based on the first coordinates, second coordinates that are of the first pixel and that correspond to the second photographing component;
determining a second pixel based on the second coordinates; and
generating the second image based on the second pixel.

5. The method according to claim 4, wherein the preset reference surface is a spherical surface that uses an optical center of the first photographing component as a sphere center.

6. The method according to any one of claims 1 to 5, wherein the determining, based on first three-dimensional information of a first object in the first image, second three-dimensional information of the first object in the second image comprises:
determining the second three-dimensional information based on the first three-dimensional information and a coordinate conversion relationship between the first photographing component and the second photographing component.

7. The method according to any one of claims 1 to 6, wherein before the determining, based on first three-dimensional information of a first object in the first image, second three-dimensional information of the first object in the second image, the method further comprises:

obtaining point cloud data that corresponds to the first image and that is collected by a sensor, wherein the point cloud data comprises third three-dimensional information of the first object; and
determining the first three-dimensional information based on the third three-dimensional information and a coordinate conversion relationship between the first photographing component and the sensor.

8. A recognition model training apparatus, comprising an obtaining unit and a processing unit, wherein

the obtaining unit is configured to obtain a first image captured by a first photographing component, wherein the first photographing component corresponds to a first angle of view; and
the processing unit is configured to:

generate, based on the first image, a second image corresponding to a second photographing component, wherein the second photographing component is determined based on the first photographing component, and the second photographing component corresponds to a second angle of view;
determine, based on first three-dimensional information of a first object in the first image, second three-dimensional information of the first object in the second image; and
train a recognition model based on the second image and the second three-dimensional information, wherein the recognition model is used to recognize an object in an image captured by the first photographing component.

9. The apparatus according to claim 8, wherein the second photographing component is a virtual photographing component; and the processing unit is further configured to rotate a coordinate system of the first photographing component by a preset angle to obtain the second photographing component.

10. The apparatus according to claim 8 or 9, wherein

    intrinsic parameters of the first photographing component and the second photographing component are the same; or
    intrinsic parameters of the first photographing component and the second photographing component are different.

11. The apparatus according to any one of claims 8 to 10, wherein the processing unit is specifically configured to:

    determine first coordinates that are of a first pixel in the first image and that are on a preset reference surface, wherein the first pixel is any pixel in the first image;
    determine, based on the first coordinates, second coordinates that are of the first pixel and that correspond to the second photographing component;
    determine a second pixel based on the second coordinates; and
    generate the second image based on the second pixel.

12. The apparatus according to claim 11, wherein the preset reference surface is a spherical surface that uses an optical center of the first photographing component as a sphere center.

13. The apparatus according to any one of claims 8 to 12, wherein
    the processing unit is specifically configured to determine the second three-dimensional information based on the first three-dimensional information and a coordinate conversion relationship between the first photographing component and the second photographing component.

14. The apparatus according to any one of claims 8 to 13, wherein

    the obtaining unit is further configured to obtain point cloud data that corresponds to the first image and that is collected by a sensor, wherein the point cloud data comprises third three-dimensional information of the first object; and
    the processing unit is further configured to determine the first three-dimensional information based on the third three-dimensional information and a coordinate conversion relationship between the first photographing component and the sensor.

15. A recognition model training apparatus, comprising a processor, wherein the processor is coupled to a memory, and the processor is configured to execute a computer program stored in the memory, to enable the recognition model training apparatus to perform the method according to any one of claims 1 to 7.

16. A mobile intelligent device, comprising a first photographing component and the recognition model training apparatus according to any one of claims 8 to 15, wherein the first photographing component is configured to: capture a first image, and transmit the first image to the recognition model training apparatus.

FIG. 1

(1)

(2)

FIG. 2

C

(1)

D

(2)

FIG. 3

Front

Right

Down

Position 2

N

α

M

x

Obstacle

N

M

Position 1

Obstacle

z

θ

o

x

Monocular
camera

y

FIG. 4

FIG. 5

FIG. 6

701    705

Processor    Processor    703

CPU 0    CPU 0

CPU 1    CPU 1

Communication
line 702    Memory

704

Communication
interface

FIG. 7

FIG. 8

Vehicle 100

Travel system 110
- Engine 111
- Transmission apparatus 112
- Energy source 113
- Wheels 114

Sensor system 120
- Positioning system 121
- Inertial measurement unit 122
- Radar 123
- Lidar 124
- Camera 125

Control system 130
- Steering system 131
- Throttle 132
- Braking unit 133
- Computer vision system 134
- Route control system 135
- Obstacle avoidance system 136

Peripheral device 140
- Wireless communication system 141
- Vehicle-mounted computer 142
- Microphone 143
- Speaker 144

Computer system 160
- Processor 161
- Data storage apparatus 162
  - Instructions 1621

Power supply 150

User interface 170

■ Long-focus*1

■ Medium-focus*4

■ Short-focus*7

● Fisheye*4

FIG. 9

| | |
|---|---|
| Obtain a first image captured by a first photographing component | S1001 |
| Generate, based on the first image, a second image corresponding to a second photographing component | S1002 |
| Determine, based on first three-dimensional information of a first object in the first image, second three-dimensional information of the first object in the second image | S1003 |
| Train a recognition model based on the second image and the second three-dimensional information | S1004 |

FIG. 10

FIG. 11

FIG. 12

Obtain a first image captured by a first photographing component — S1001

Determine first coordinates that are of a first pixel in the first image and that are on a preset reference surface — S1005

Determine, based on the first coordinates, second coordinates that are of the first pixel and that correspond to a second photographing component — S1006

Determine a second pixel based on the second coordinates — S1007

Generate a second image based on the second pixel — S1008

Determine, based on first three-dimensional information of a first object in the first image, second three-dimensional information of the first object in the second image — S1003

Train a recognition model based on the second image and the second three-dimensional information — S1004

FIG. 13

FIG. 14

FIG. 15

FIG. 16

FIG. 17

## INTERNATIONAL SEARCH REPORT

| International application No. |
| --- |
| **PCT/CN2023/083772** |

| A. | CLASSIFICATION OF SUBJECT MATTER |
| --- | --- |

G06T5/00(2006.01)i

According to International Patent Classification (IPC) or to both national classification and IPC

| B. | FIELDS SEARCHED |
| --- | --- |

Minimum documentation searched (classification system followed by classification symbols)

IPC: G06T, G09K

Documentation searched other than minimum documentation to the extent that such documents are included in the fields searched

Electronic data base consulted during the international search (name of data base and, where practicable, search terms used)

CNTXT, CNKI, DWPI, ENTXT, ENTXTC, WPABS, IEEE, CNABS: 识别, 视角, 拍摄, 三维, 坐标系, 点云, 训练, recognition, perspective, shooting, three-dimensional, coordinate system, point cloud, training

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 111918049 A (GUANGDONG SCHEN INDUSTRY INVESTMENT CO., LTD.) 10 November 2020 (2020-11-10) <br> description, paragraphs 52-106 | 1-16 |
| A | CN 112733723 A (NANJING YIZIZHU NETWORK TECHNOLOGY CO., LTD.) 30 April 2021 (2021-04-30) <br> entire document | 1-16 |
| A | CN 113469091 A (BEIJING DILUSENSE TECHNOLOGY CORPORATION; HEFEI DILUSENSE TECHNOLOGY CO., LTD.) 01 October 2021 (2021-10-01) <br> entire document | 1-16 |
| A | CN 111862296 A (BOE TECHNOLOGY GROUP CO., LTD.) 30 October 2020 (2020-10-30) <br> entire document | 1-16 |
| A | CN 112287867 A (SHANGHAI YITU NETWORK TECHNOLOGY CO., LTD.) 29 January 2021 (2021-01-29) <br> entire document | 1-16 |
| A | KR 20180045164 A (HULIAC CO., LTD.) 04 May 2018 (2018-05-04) <br> entire document | 1-16 |

| ☐ Further documents are listed in the continuation of Box C. | ☑ See patent family annex. |
| --- | --- |

| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |
| --- | --- |

| Date of the actual completion of the international search | Date of mailing of the international search report |
| --- | --- |
| **07 June 2023** | **19 June 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/083772**

| Patent document cited in search report | | | Publication date (day/month/year) | Patent family member(s) | | | Publication date (day/month/year) |
|---|---|---|---|---|---|---|---|
| CN | 111918049 | A | 10 November 2020 | CN | 111918049 | B | 06 September 2022 |
| CN | 112733723 | A | 30 April 2021 | None | | | |
| CN | 113469091 | A | 01 October 2021 | CN | 113469091 | B | 25 March 2022 |
| CN | 111862296 | A | 30 October 2020 | WO | 2020215898 | A1 | 29 October 2020 |
| CN | 112287867 | A | 29 January 2021 | CN | 112287867 | B | 08 June 2021 |
| KR | 20180045164 | A | 04 May 2018 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211009619X

- CN AUGUST222022